# EUROPÄISCHE PATENTSCHRIFT

(11) **EP 1 408 415 B1**
(45) Veröffentlichungstag und Bekanntmachung des Hinweises auf die Patenterteilung: **04.01.2006**
(21) Anmeldenummer: 03022708.6
(22) Anmeldetag: 09.10.2003
(51) Int. Cl.: G06F 13/38, B60R 16/02, H04L 12/40, G05B 23/02

(54) **Schaltungsanordnung zur Ermittlung eines ein wake-up-Signal sendenden Steuergeräts eines Bus-Systems mit mehreren weiteren Steuergeräten**
Circuit for determining the controller sending a wake-up-signal to a bus system with several further controllers
Circuit pour déterminer le contrôleur ayant envoyé un signal de réveil à un bus comportant plusieurs autres contrôleurs

(30) Priorität: 11.10.2002 DE 10247637
(43) Veröffentlichungstag der Anmeldung: 14.04.2004
(73) Patentinhaber: AUDI AG, 85045 Ingolstadt (DE)
(72) Erfinder: Bleier, Liebhard, 85049 Ingolstadt (DE)
(74) Vertreter: Patzelt, Heike Anna Maria

(56) Entgegenhaltungen:
- EP-A- 0 620 664
- DE-C- 19 611 945
- US-A- 5 781 585

## Beschreibung

Die Erfindung betrifft eine Schaltungsanordnung zur Ermittlung eines ein wake-up-Signal sendenden Steuergerät eines Bus-Systems mit mehreren weiteren Steuergeräten, insbesondere eines CAN-Busses eine Kraftfahrzeugs.

In modernen Kraftfahrzeugen beispielsweise erfolgt die Kommunikation zwischen den mehreren Steuergeräten (es sind zum Teil mehr als 30 Steuergeräte zur Steuerung einzelner Komponenten bzw. Funktionen vorgesehen) über eine Busleitung bzw. ein Bussystem, wobei dieser Bus bei einem Kraftfahrzeug üblicherweise ein CAN-Bus ist. Die Steuergeräte befinden sich in einem Sleep-Modus, wenn sie nicht benötigt werden, wobei die Steuergeräte in diesem Betriebsmodus eine sehr geringe Stromaufnahme haben. Üblicherweise jedoch kann jedes Steuergerät den kompletten Bus, also sämtliche ebenfalls an der Busleitung hängenden anderen Steuergeräte durch Senden eines sogenannten wake-up-Signals wecken. Dies führt dazu, dass alle Steuergeräte in den normalen Arbeitsmodus mit voller Stromaufnahme wechseln. Häufige wake-ups wirken sich demnach deutlich auf den Ladezustand der Batterie und damit die Verfügbarkeit des Fahrzeugs aus. Dies gilt insbesondere, wenn wake-up-Signale gesendet werden, die eigentlich nicht gesendet werden müssten, wenn also schlichtweg ein falsches Signal an den Bus gegeben wird.

Um solche Fehlfunktionen erfassen und ggf. beseitigend eingreifen zu können, wäre es erforderlich, dasjenige Steuergerät ausfindig zu machen, das das erste wake-up-Signal, das zum Einschalten aller anderen Steuergeräte geführt hat, gesendet hat. Dies ist soweit bekannt nicht möglich. Dies liegt primär darin begründet, dass die über ein wake-up-Signal "geweckten" Steuergeräte sehr schnell neu initialisieren und anschließend selbst Signale auf den Bus geben um anzuzeigen, dass sie betriebsbereit sind. Es kann sogar der Fall auftreten, dass ein "gewecktes" Steuergerät, das schneller initialisiert, seine Bereitschaft schneller signalisiert als das erste Steuergerät.

Der Erfindung liegt daher das Problem zugrunde, eine Schaltungsanordnung anzugeben, die die Identifizierung eines ein wake-up-Signal sendenden Steuergeräts eindeutig errnöglicht.

Zur Lösung dieses Problems ist eine Schaltungsanordnung bzw. eine Mess- oder Überwachungsapparatur der eingangs genannten Art vorgesehen, die sich dadurch auszeichnet, dass sie zwischen jedes Steuergerät und die Busleitung geschaltete Stromrichtungserfassungsmittel zur Erfassung eines wake-up signalbedingten Stromflusses am sendenden Steuergerät, jedem Steuergerät zugeordnete Signalausgabemittel zum Ausgeben eines das das wake-up-Signal sendende Steuergerät identifizierenden Signals und Mittel zum Sperren der den anderen Steuergeräten zugeordneten Signalausgabemittel nach Erfassen eines gesendeten wake-up-Signals aufweist.

Bei der erfindungsgemäßen Schaltungsanordnung ist jedes Steuergerät über das Stromrichtungserfassungsmittel quasi von der Busleitung physikalisch entkoppelt, informations- oder datentechnisch jedoch gebunden. Das Stromrichtungserfassungsmittel überwacht den Stromfluss an jedem Steuergerät. Im wake-up-Fall bzw. im Sende-Fall ändert sich der Betriebsmodus des sendenden Steuergeräts, es tritt eine Spannungsänderung am sendenden Steuergerät auf, es stellt sich ein Stromfluss am sendenden Steuergerät ein. Dieser Stromfluss ist richtungsgebunden, das heißt der Strom fließt am sendenden Steuergerät in die entgegengesetzte Richtung wie an den sonstigen an der Busleitung hängenden Steuergeräten, die quasi als Empfänger dienen. Das Stromrichtungserfassungsmittel ist nun in den Strompfad zwischen Steuergerät und Bussystem geschaltet, so dass ein wake-up-Signal bedingter Stromfluss unmittelbar erfasst werden kann.

Dem Stromrichtungserfassungsmittel ist nun ein Signalausgabemittel zugeordnet, das dazu dient, ein das Steuergerät, das das wake-up-Signal - erfasst über das Stromrichtungserfassungsmittel - sendet, zu identifizieren. Gibt also das Stromrichtungserfassungsmittel ein Signal, dass das ihm zugeordnete Steuergerät als erstes das wake-up-Signal gesendet hat, so geben die Signalausgabemittel unmittelbar ein das Steuergerät identifizierendes Signal aus, über welches dann das Steuergerät zweifelsfrei identifiziert werden kann. Gleichzeitig dazu werden sämtliche anderen Steuergeräte bzw. die ihnen zugeordneten Signalausgabemittel gesperrt. Hierzu sind Sperrmittel vorgesehen, die dann angestoßen werden, wenn ein Stromerfassungsmittel bzw. ein Signalausgabemittel eindeutig ein das wake-up-Signal sendendes Steuergerät identifiziert haben, wenn also der wake-up-Fall erkannt wurde. Über diese Sperrmittel wird verhindert, dass die von den hierüber geweckten Steuergeräten gegebenen Signale, die je nach Initialisierungsgeschwindigkeit eines jeweiligen Steuergeräts unmittelbar nach dem Geben des wake-up-Signals am Bus anliegen, erfasst bzw. derart verarbeitet werden, dass ein Signalausgabemittel auch für ein solches "gewecktes" Steuergerät ein Identifizierungssignal ausgibt. Wäre dies der Fall, so würden innerhalb sehr kurzer Zeit sämtliche Signalausgabemittel ein Identifizierungssignal senden, da wie gesagt alle Steuergeräte am Bus "geweckt" werden und ihren Betriebsmodus einnehmen. Durch die erfindungsgemäß vorgesehenen Sperrmittel wird dies nun vermieden, so dass lediglich dasjenige Steuergerät angezeigt wird, das tatsächlich das ursächliche wake-up-Signal gesendet hat.

Aufgrund der Eindeutigkeit der Stromrichtung im wake-up-Sendefall und deren Erfassung sowie dem Sperren der anderen Steuergeräte bzw. der zugeordneten Signalausgabemittel kann somit vorteilhaft auf eindeutige Weise ein ein wake-up sendendes Steuergerät erkannt und für den Bearbeiter eindeutig identifiziert werden. Ist nun bekannt, welches Steuergerät das wake-up-Signal gesendet hat, kann nun die Ursache untersucht werden, warum dieses wake-up-Signal nun gegeben wurde.

Die Stromrichtungserfassungsmittel umfassen in Weiterbildung des Erfindungsgedankens zwei anti-parallel geschaltete Dioden, denen zweckmäßigerweise ein eine Offsetspannung ausgleichender Widerstand parallel geschaltet ist. Über diese beiden anti-parallel geschalteten Dioden ist die oben beschriebene physikalische Trennung bei gleichzeitiger informations- oder datenmäßiger Verbindung zur Busleitung realisiert. Denn je nachdem ob ein Steuergerät sendet oder empfängt ist stets eine der beiden anti-parallelen Dioden aktiv. Bezogen auf den wake-up- bzw. Sendefall bewirkt nun die eine Diode, dass über sie ein in seiner Richtung sendebedingter Strom ins Steuergerät fließt bzw. sich ein Spannungsabfall einstellt. Die zweite anti-parallele Diode ermöglicht nun im Empfangsfall eine normale Kommunikation mit dem Bussystem. Um stabile Messgrößen zu erhalten kommen zweckmäßigerweise Silizium-Dioden zum Einsatz.

Da im Sleep-Modus an der Anode und Kathode der Dioden annähernd dieselben Spannungspotentiale herrschen sollten sich im Idealfall keine Offset-Spannungen einstellen. Eventuelle Offset-Spannungen werden jedoch über den bereits beschriebenen Widerstand ausgeglichen.

In Weiterbildung des Erfindungsgedankens kann vorgesehen sein, dass ein Stromrichtungserfassungsmittel einen Differenzoperationsverstärker umfasst. Dieser Differenzoperationsverstärker liefert nun aufgrund des stromflussbedingten Spannungsabfalls über die sendende Diode einen negativen Spannungspegel, der weiterverarbeitet werden kann. Zur Spannungspegelanpassung kann dem Differenzoperationsverstärker ferner ein invertierender Operationsverstärker, der das Signal des Differenzoperationsverstärkers hinsichtlich des Spannungspegels anhebt, nachgeschaltet sein.

In einer ersten Erfindungsalternative kann weiterhin vorgesehen sein, dass die Signalausgabemittel ein Flip-Flop und ein Anzeigemittel umfassen, wobei das Flip-Flop bei Vorliegen eines vom Stromrichtungserfassungsmittel gelieferten Signals, das das Senden eines wake-up-Signals anzeigt, ein Signal an das Anzeigemittel gibt. Wird nun also über die Stromrichtungserfassungsmittel ein wake-up-Fall am zugeordneten Steuergerät erkannt, so bewirkt das vom Stromerfassungsmittel gelieferte Signal ein Schalten des Flip-Flops, so dass das Flip-Flop ein ihm nachgeschaltetes Anzeigemittel, z.B. in Form eines Leuchtmittels, insbesondere einer LED anspricht, worüber dann das zugeordnete "weckende" Steuergerät identifiziert wird.

Alternativ zur Verwendung eines Anzeigemittels, das vom Bearbeiter optisch unmittelbar erkannt werden kann, besteht natürlich die Möglichkeit, ein Flip-Flop vorzusehen sowie eine ihm nachgeschaltete Speichereinrichtung, wobei in diesem Fall das Flip-Flop bei Vorliegen eines vom Stromrichtungserfassungsmittel gelieferten Signals, das das Senden eines wake-up-Signals anzeigt, ein Signal an die Speichereinrichtung gibt, wo die Identität des das wake-up-Signal sendenden Steuergeräts gespeichert wird. Aus diesem Speicher kann dann bei Bedarf das Identitätssignal ausgelesen und die Identität des weckenden Steuergeräts erkannt werden.

Ein einem Steuergerät zugeordnetes Sperrmittel kann erfindungsgemäß ein UND-Glied umfassen, an dessen einen Eingang das Signal des zugeordneten Stromrichtungserfassungsmittels gegeben wird und an dessen anderen Eingang ein allen UND-Gliedern gegebenes gemeinsames Verriegelungssignal gegeben wird, wobei das Verriegelungssignal über einen Inverter nach Erfassen eines ersten wake-up-Signals invertiert wird, so dass bei Anliegen eines die wake-up-Signalgabe des zugeordneten Steuergeräts anzeigenden Signals vom Stromrichtungserfassungsmittel eine UND-Verknüpfung am UND-Glied ausgeschlossen ist.

Die Möglichkeit des Signalausgabemittels im wake-up-Fall ein Identifikationssignal auszugeben wird nach der Erfindungsausgestaltung erst dadurch realisiert, dass am vorgeschalteten UND-Glied zwei eine zulässige UND-Verknüpfung zulassende Signale vorliegen. Das eine Signal ist das vom zugeordneten Stromrichtungserfassungsmittel auf den ersten Eingang gegebene Signal, wenn der wake-up-Fall erkannt wird. Das andere Signal ist ein Verriegelungssignal, das im Sleep-Modus konstant anliegt. Dieses Verriegelungssignal ist nun derart, dass bei Gabe eines den wake-up-Fall erkennenden Signals vom Stromrichtungserfassungsmittel das UND-Glied aufgrund einer zulässigen UND-Verknüpfung schaltet und das Signal vom UND-Glied entsprechend an das Signalausgabemittel gegeben wird, so dass dieses das sendende Steuergerät identifizieren bzw. anzeigen kann. Gleichzeitig werden alle anderen UND-Glieder verriegelt, wozu das ursprünglich anliegende Verriegelungssignal über einen Inverter invertiert wird. Wird nun von einem "geweckten" Steuergerät ein Signal gegeben, was über das Stromrichtungserfassungsmittel erfasst wird, so wird zwar dieses vom Stromrichtungserfassungsmittel gelieferte Signal an den einen Eingang des UND-Glieds gegeben, jedoch ist eine zulässige UND-Verknüpfung am UND-Glied aufgrund der Invertierung des Verriegelungssignals nicht mehr möglich. Grundsätzlich liegt also am zweiten Eingang des UND-Glieds im Sleep-Modus stets eine "1" an, während am ersten Eingang zunächst eine "0" anliegt. Sendet nun ein Steuergerät ein wake-up-Signal so wird über das Stromerfassungsmittel an den ersten Eingang, den wake-up-Fall erkennend, eine "1" angelegt, es findet also eine UND-Verknüpfung statt, das UND-Glied schaltet. Aufgrund der Invertierung wird nun das ursprüngliche Verriegelungssignal invertiert, es liegt an allen anderen UND-Gliedern am zweiten Eingang eine "0" an. Wird nun nach Einschalten aller anderen Steuergeräten an den ersten Eingang eine "1" angelegt, kann eine zulässige Verknüpfung nicht mehr erfolgen. Das Signalabgabemittel wird folglich nicht angesprochen und ist gesperrt.

Zweckmäßigerweise wird hierbei bei Erfassen der ersten wake-up-Signalgabe das Signal dieses Signalausgabemittels, insbesondere des Flip-Flops an den Inverter gelegt und dort zum Verriegeln der UND-Glieder der dem anderen Steuergeräten zugeordneten Sperrmittel invertiert. Das heißt die Invertierung erfolgt ausschließlich auf Basis des Signalausgabemittelsignals. Dabei ist es zweckmäßig, wenn allen Sperrmitteln bzw. allen UND-Gliedern ein gemeinsamer Inverter zugeordnet ist, mit dem die Ausgänge aller Signalausgabemittel, insbesondere aller Flip-Flops verbunden sind. Der Schaltungsaufwand wird hierdurch reduziert, gleichzeitig wird dadurch ermöglicht, dass alle UND-Glieder bzw. Signalausgabemittel der "geweckten" Steuergeräte gleichzeitig und synchron gesperrt werden können.

In Weiterbildung des Erfindungsgedankens kann vorgesehen sein, dass jedem Steuergerät zwei Stromrichtungserfassungsmittel, zwei Signalausgabemittel und zwei Sperrmittel zugeordnet sind, wobei je ein Stromrichtungserfassungsmittel, ein Signalausgabemittel und ein Sperrmittel für den High-Kanal bzw. den Low-Kanat der Busleitung vorgesehen sind, jedoch invertiert arbeiten. Ein wake-up-Vorgang kann sowohl auf dem High-Kanal wie auch auf dem Low-Kanal erfolgen. Die "Verdopplung" der genannten Schaltungskomponenten bewirkt nun, dass unabhängig davon, ob nun das wake-up-Signal auf dem High- oder dem Low-Kanal gegeben wird, in jedem Fall das sendende Steuergerät identifiziert werden kann.

Die Ausgänge aller Signalausgabemittel, also der jeweils doppelt vorgesehenen Signalausgabemittel eines Steuergeräts, insbesondere deren Flip-Flops, werden zweckmäßigerweise auf eine gemeinsame zum Inverter führende Leitung gegeben, wobei die beiden Ausgänge der einem gemeinsamen Steuergerät zugeordneten Signalausgabemittel, insbesondere der Flip-Flops, über eine ODER-Schaltung geführt werden, so dass entweder ein von dem dem High-Kanal oder dem dem Low-Kanal zugeordneten Signalausgabemittel, insbesondere dem Flip-Flop gegebenes Signal an den Inverter gegeben wird. Diese ODER-Schaltung ist zweckmäßigerweise mittels zwei mit ihren Kathoden parallel geschalteter Dioden realisiert.

Die Schaltungsanordnung selbst kann erfindungsgemäß Teil eines Funktionstestgeräts zum Testen von an einer Busleitung hängenden Steuergeräten vor deren Einbau insbesondere in ein Kraftfahrzeug sein. Es handelt sich dann also insgesamt um eine Labormessapparatur, in der die Steuergeräte hinsichtlich ihrer Funktion getestet oder neue Bussysteme entwickelt werden können. Alternativ dazu kann die Schaltungsanordnung auch Teil eines Überwachungsgeräts sein, das zusammen mit den an der Busleitung hängenden Steuergeräten insbesondere in ein Kraftfahrzeug eingebaut ist. Das heißt die Schaltungsanordnung wird auch im Rahmen des üblichen Kraftfahrzeugbetriebs zu Überwachungszwecken genutzt, ist also in das Kraftfahrzeug selbst integriert.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze eines Bussystems mit mehreren Steuergeräten und lediglich in einer Prinzipdarstellung gezeigter Schaltungsanordnung zur Darstellung der Stromrichtung im wake-up-Fall über den High-Kanal,
- Fig. 2: den Signalverlauf im Fall der Stromrichtungserkennung im wake-up-Fall über den High-Kanal,
- Fig. 3: eine Prinzipskizze zur Darstellung des Stromrichtungsverlaufs im wake-up-Fall am Low-Kanal,
- Fig. 4: eine Prinzipskizze zur Darstellung der Stromrichtungserkennung im wake-up-Fall am Low-Kanal,
- Fig. 5: eine Prinzipskizze einer erfindungsgemäßen Schaltungsanordnung,und
- Fig. 6: ein Blockschaltbild einer erfindungsgemäßen Schaltungsanordnung.

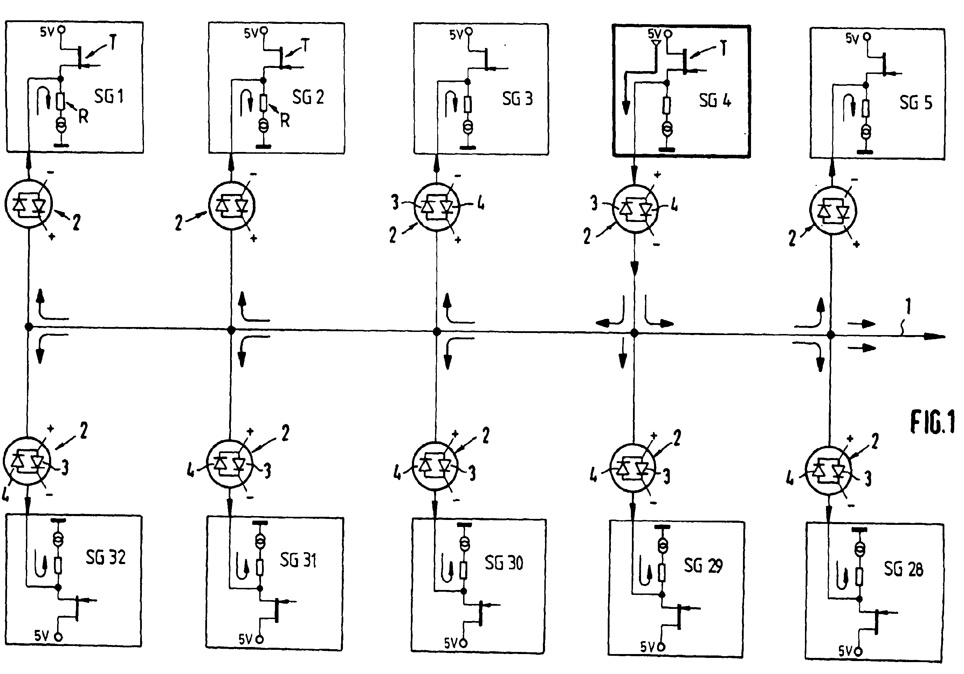

Fig. 1 zeigt ein Bussystem umfassend eine Busleitung 1, z.B. einen CAN-Bus oder einen anderen Bus (z.B. Infotainmentantrieb) eines Kraftfahrzeugs. Die gezeigte Busleitung 1 stellt den High-Kanal in den mit Fig. 1 beschriebenen Ausführungsbeispiel dar. An der Busleitung 1 hängen im gezeigten Beispiel mehrere Steuergeräte, wobei hierin insgesamt 32 Steuergeräte vorgesehen sind, jedoch aus Übersichtlichkeitsgründen lediglich die Steuergeräte SG1 - SG5 und SG28 - SG32 dargestellt sind. Die Steuergeräte sind nicht im Detail dargestellt. Gezeigt ist lediglich jeweils ein Transistor T sowie ein pull-down-Widerstand R.

Fig. 1 zeigt den wake-up-Vorgang auf dem High-Kanal, wobei in Fig. 1 die Stromrichtungen im wake-up-Fall dargestellt sind. Es sei angenommen, dass das Steuergerät SG4, das stärker umrandet gezeigt ist, das wake-up-Signal sendet. In diesem Fall treibt der Transistor T des Steuergeräts SG4 einen aufgrund des Spannungsanstiegs am Steuergerät SG4 im Sendefall fließenden Strom über jeden pull-down-Widerstand R eines jeden der weiteren Steuergeräte. Der Strom fließt also wie durch die Pfeile dargestellt vom Steuergerät SG4 zu den anderen Steuergeräten SG1 - SG3 sowie SG5 - SG32.

In der Verbindungsleitung jedes Steuergeräts ist nun ein Stromrichtungserfassungsmittel 2 umfassend zwei anti-parallel geschaltete Dioden 3, 4 vorgesehen, wobei hierauf nachfolgend noch näher eingegangen wird. Über diese anti-parallele Diodenschaltung wird die Stromrichtung des hierüber fließenden Stromes erkannt. Der Strom vom Steuergerät SG4 fließt über die rechte Diode 4 zur Busleitung 1. Die Stromrichtung ist also im Sendefall eindeutig über die im Sendefall durchschaltende, den Strom führende Diode erfassbar. Während im Sendefall der Strom vom Steuergerät SG4 zur Busleitung 1 über die Diode 4 fließt und die Diode 3 gesperrt ist, fließt der Strom zu allen anderen Steuergeräten über die nicht gesperrte Diode 3, während die Diode 4 gesperrt ist. Es kann also aufgrund der Stromrichtung am jeweiligen Steuergerät eindeutig erkannt werden, ob ein Steuergerät sendet oder empfängt. Auf die Auswertung der Stromrichtungserkennung wird nachfolgend noch eingegangen.

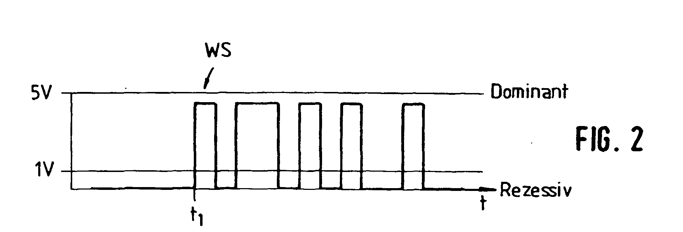

Fig. 2 zeigt in Form einer Prinzipskizze den Zeitpunkt der Stromrichtungserkennung im in Fig. 1 beschriebenen High-wake-up-Fall. Sind alle Steuergeräte im Sleep-Modus, so liegt auf der Busleitung 1 bzw. dem High-Kanal keine Spannung. Im Zeitpunkt, in dem das Steuergerät SG4 das wake-up-Signal sendet (in Fig. 2 zur Zeit t₁) stellt sich ein Spannungsanstieg auf dem High-Kanal des Busses ein, zwangsläufig verbunden mit einem Stromfluss. Die ansteigende Signalflanke des wake-up-Signals WS definiert nun den Zeitpunkt t₁, zu dem über die Diodensensorik die Stromrichtung erkannt und das wake-up-Signal eindeutig erfasst wird.

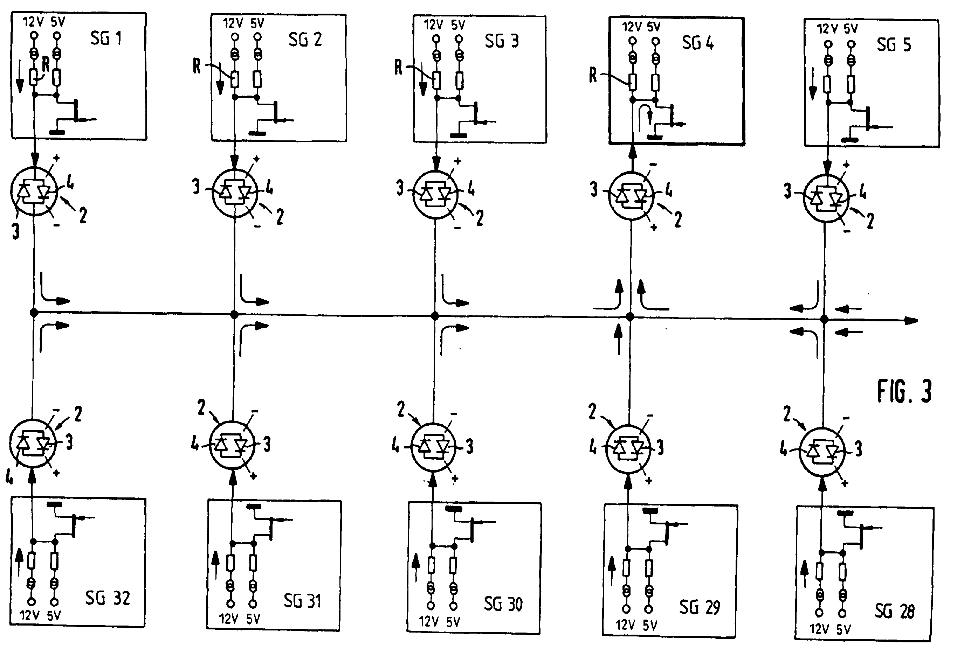

Fig. 3 zeigt die Stromrichtungen im wake-up-Fall auf dem Low-Kanal der Busleitung 1. Auch hier wird davon ausgegangen, dass das Steuergerät SG4 das wake-up-Signal auf den Low-Kanal gibt. Im Sleep-Modus herrscht über dem jeweiligen pull-up-Widerstand R eines jeden Steuergeräts auf dem Low-Kanal eine Spannung von 12 V entsprechend der Batteriespannung im Falle einer Installation in einem Kraftfahrzeug. Im wake-up-Fall zieht nun der zweite Transistor T des Steuergeräts SG4 die pull-up-Widerstände aller anderen Steuergeräte nach Masse. Der hierdurch getriebene Strom erzeugt im Stromrichtungserfassungsmittel 2, also der anti-parallelen Diodesensorik des Steuergeräts SG4 ein gegenphasiges Sensorsignal gegenüber den restlichen Steuergeräten. Im gezeigten Beispiel fließt hier der Strom von allen anderen Steuergeräten zum Steuergerät 4 über die Diode 3, während die Diode 4 der Diodensensorik des Steuergeräts SG4 gesperrt ist. Der Stromfluss ist hier also genau umgekehrt wie im vorher beschriebenen High-Fall.

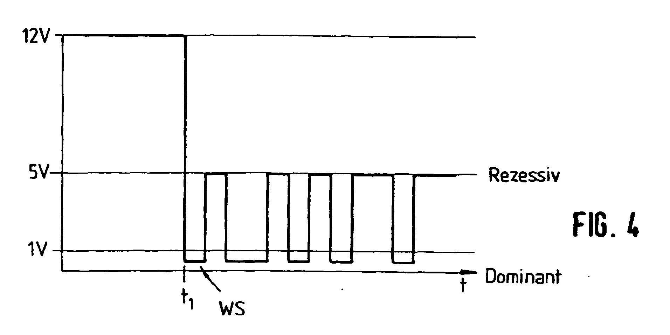

Entsprechend umgekehrt sind die Verhältnisse hinsichtlich der am Bus liegenden Signalfolge wie sie in Fig. 4 gezeigt ist. In Fig. 4 ist zum einen der 12 V-Signalpegel, der im Sleep-Modus an dem Low-Kanal anliegt, gezeigt. Im Zeitpunkt t₁ wird auch hier vom Steuergerät SG4 das wake-up-Signal gegeben. Die Spannung auf dem Low-Kanal sinkt, wobei die abfallende Flanke des wake-up-Signals WS den Zeitpunkt t₁ definiert. Hier wie auch im in Fig. 2 gezeigten Fall wird, um einen großen Stör-/Nutzsignal-Abstand zu gewinnen, eine Differenzwirkung erzeugt.

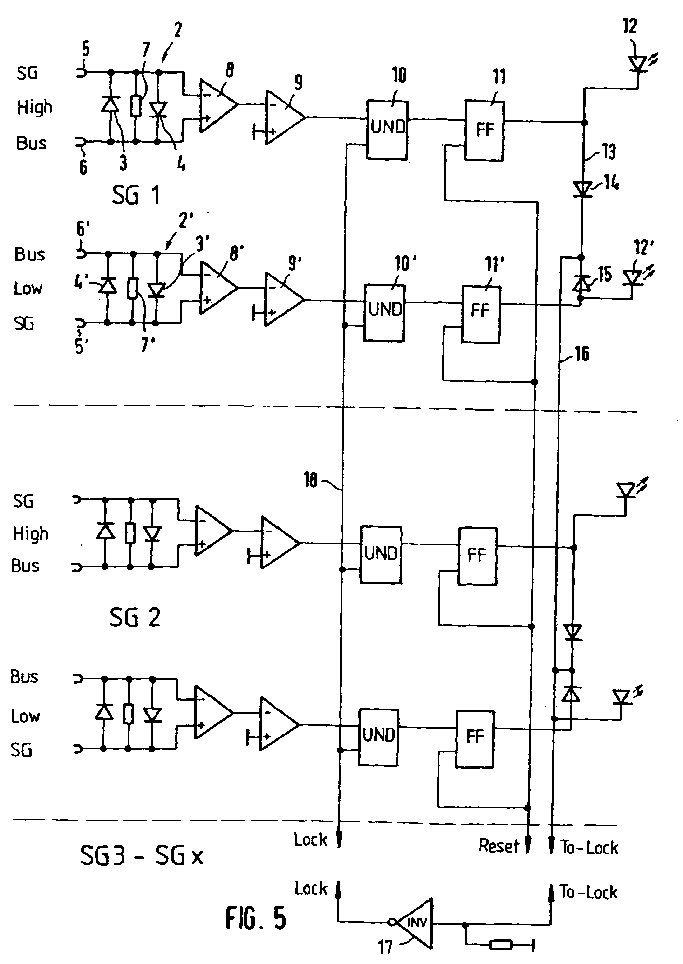

Fig. 5 zeigt in Form einer Prinzipskizze eine erfindungsgemäße Schaltungsanordnung zum Erfassen und Identifizieren eines ein wake-up-Signal sendenden Steuergeräts. Gezeigt sind die wesentlichen Schaltungskomponenten für die Steuergeräte SG1 und SG2, wobei sich dieses Schaltungsschema fortsetzt bis zum letzten busseitig gebundenen Steuergerät. Nachdem die Schaltungskonzeption aller Steuergeräte gleich ist wird der Aufbau lediglich bezüglich des Steuergeräts SG1 näher beschrieben.

Insgesamt sind zwei Schaltungsgruppen zu unterscheiden, nämlich die Schaltungsgruppe für den High-Kanal sowie die für den Low-Kanal, was durch die Angaben "High" und "Low" in Fig. 5 deutlich wird. Angegeben sind die jeweiligen Anschlusspunkte 5 zum Steuergerät SG bzw. 6 zur Busleitung 1. Gezeigt ist das Stromerfassungsmittel 2, das wie beschrieben aus den beiden anti-parallelen Dioden 3, 4 besteht. Den anti-parallel geschalteten Dioden 3, 4 ist ein Widerstand 7 parallel geschaltet, der zum Ausgleich etwaiger Offset-Spannungen dient.

Der anti-parallelen Diodenmimik ist ein Differenzoperationsverstärker 8 nachgeschaltet, dessen Ausgang wiederum auf einen invertierenden Operationsverstärker 9, der das vom Differenzoperationsverstärker abgegebene Signal auf den erforderlichen Spannungspegel bringt, nachgeschaltet.

Der Ausgang des invertierenden Operationsverstärkers 9 wird auf den ersten Eingang eines UND-Glieds 10 gegeben, welches Teil eines Sperrmittels ist, auf das nachfolgend nochmal eingegangen wird. Der Ausgang des UND-Glieds 10 wird auf einen Eingang eines Flip-Flops 11 gegeben, welches wiederum Teil eines Signal-Ausgabemittels ist, über das ein ein wake-up-Signal sendendes Steuergerät identifiziert wird. Der Ausgang des Flip-Flops 11 ist mit einem Leuchtmittel, hier einer LED 12 verbunden, die hierüber angestoßen wird. Ferner liegt der Ausgang des Flip-Flops 11 an einer Verbindungsleitung 13, an der auch das Flip-Flop 11' des Low-Kanals liegt.

Die Schaltungsanordnung ist hinsichtlich des Low-Kanals quasi identisch aufgebaut, lediglich die Anschlüsse 5' und 6' sind vertauscht angeordnet. Auch hier sind die beiden anti-parallel geschalteten Dioden 3', 4' sowie ein Offset ausgleichender Widerstand 7' vorgesehen. Der Diodenmimik ist auch hier ein Differenzoperationsverstärker 8' sowie ein invertierender Operationsverstärker 9' nachgeschalten. Das Signal des Operationsverstärkers 9' wird auf den ersten Eingang eines UND-Glieds 10' gegeben, dem wiederum das bereits erwähnte Flip-Flop 11' nachgeschaltet ist.

Die Ausgänge der beiden Flip-Flops 11, 11' werden wie beschrieben auf die gemeinsame Leitung 13 gegeben, wo eine ODER-Schaltung unter Verwendung zweier mit ihren Kathoden parallel geschalteter Dioden 14, 15 vorgesehen ist. Je nach dem ob ein wake-up-Signal auf dem High- oder dem Low-Kanal erkannt wird, wird entweder das Signal des Flip-Flops 11 oder das Signal des Flip-Flops 11' über diese ODER-Dioden-Mimik an eine weiterführende Signalleitung 16 gegeben. Hierauf wird nachfolgend noch eingegangen.

Ersichtlich ist also der Aufbau der Schaltungsanordnung für den High- und den Low-Kanal weitgehend identisch. In jedem Fall ist es möglich, bei Erfassen eines wake-up-Signals des zugeordneten Steuergeräts SG1 dies über das jeweilige Anzeigemittel in Form der LED 12 bzw. 12' zu identifizieren. Für jedes der busseitig gebundenen Steuergeräte ist eine derartige Schaltung vorgesehen, wie exemplarisch durch die Darstellung der Schaltungskomponenten SG2 angedeutet ist.

Durch das Umdrehen der Stromrichtung an beiden Dioden 3, 4 bzw. 3', 4' im Sende- bzw. Empfangsfall ändert sich auch die Polarität an den Ausgängen der beiden nachgeschalteten Operationsverstärker 8, 9 bzw. 8', 9'. Im Sendefall liegt am jeweiligen Operationsverstärker 9 bzw. 9' ein positiver Spannungspegel und im Empfangsfall ein negativer Spannungspegel an. Somit ist eine eindeutige Zuordnung eines Steuergeräts gegeben.

Wie beschrieben führen die Signalausgänge aller Flip-Flops 11 bzw. 11' der Schaltungseinheiten, die jeweils einem Steuergerät zugeordnet sind, stets auf die gemeinsame Leitung 16. Diese Leitung 16 führt zu einem Inverter 17, wo das bei Erfassen eines wake-up-Falls vom jeweiligen Flip-Flop gegebene Signal invertiert wird. Über die gemeinsame Leitung 18 wird dieses invertierte Signal an den zweiten Eingang jedes der UND-Glieder 10, 10' gegeben, worüber im Sendefall das jeweilige UND-Glied gesperrt wird, worauf nachfolgend eingegangen wird.

Es sei nun angenommen, dass das Steuergerät SG1 auf dem High-Kanal ein wake-up-Signal sendet. Im wake-up-Fall bewirkt nun der Strom über die Diode 4 aus dem "weckenden" Steuergerät SG1 einen Spannungsabfalle von ca. ≥ 0,6 V. Dieser Spannungsabfall wird über die Differenzschaltung am Differenzoperationsverstärker 8 am Ausgang in einen negativen Spannungspegel gewandelt, welcher auf den invertierenden Operationsverstärker 9 gegeben wird, der das Signal invertiert und auf den erforderlichen Spannungspegel bringt. Das Ausgangssignal des Operationsverstärkers 9 wird nun auf den ersten Eingang des UND-Glieds 10 gegeben. Über die gemeinsame Leitung 18 liegt im Sleep-Mode zunächst generell ein Signal an, das bei Anliegen eines den wake-up-Fall erfassenden Signals am ersten Eingang eine zulässige UND-Verknüpfung ermöglicht, es liegt also eine logische "1" an. Wird nun über den Operationsverstärker 9 der Sendefall durch Signalgabe angezeigt, liegt auch am ersten Eingang eine logische "1" an, das heißt das UND-Glied schaltet und legt ein entsprechendes Signal an einen Eingang des Flip-Flops 11 an. Vom Flip-Flop 11 (bzw. den anderen Flip-Flops 11') sind lediglich zwei Eingänge dargestellt, ein näheres Eingehen auf die anderen ist zur Darstellung des Grundprinzips nicht erforderlich. Das Flip-Flop 11 schaltet durch, sein Ausgangssignal wird an die LED 12 gegeben, die leuchtet und anzeigt, dass das Steuergerät 1 das wake-up-Signal gegeben hat.

Gleichzeitig wird das Ausgangssignal des Flip-Flops 11 auf die Leitung 13 gegeben, wo es über die Dioden 14 auf die gemeinsame Leitung 16 gelegt wird und zum Inverter 17 geführt wird, wo es invertiert wird. Diese Invertierung führt dazu, dass auf der gemeinsamen Leitung 18 nun ein Signal liegt, das eine logische "0" darstellt. Dieses Signal bzw. die logische "0" wird nun an alle zweiten Eingänge der anderen UND-Glieder gelegt. Dies bewirkt, dass nach dem Einschalten aller "geweckten" Steuergeräte eine logische UND-Verknüpfung und damit ein Durchschalten des jeweiligen UND-Glieds 10 bzw. 10' nicht mehr möglich ist. Sind alle übrigen Steuergeräte "geweckt" so legen sie selbst entsprechende Signale an den Bus, sie senden also ebenfalls. Dies wird in jedem Fall über die Stromrichtungserfassungsmittel erkannt und es wird ein entsprechendes Signal über die jeweiligen Operationsverstärker 9, 9' and en ersten Eingang jedes UND-Glieds 10, 10' gegeben. Nachdem aber am anderen Eingang eine logische "0" liegt, kann eine zulässige UND-Verknüpfung dort nicht erfolgen. Es wird also kein Signal an das nachgeschaltete Flip-Flop 11 bzw. 11' gegeben. Das Signalausgabemittel, also das jeweilige Flip-Flop 11 bzw. 11' nebst zugeordnetem Anzeigemittel (LEDs 12 bzw. 12') wird verriegelt. Das heißt wenngleich sämtliche anderen Steuergeräte eingeschaltet und selbst Signale gesendet haben, wird dies nicht angezeigt. Die einzige Anzeige ist im beschriebenen Beispiel die LED 12, die zuverlässigerweise betrieben wird und das das wake-up-Signal sendende Steuergerät SG1 identifiziert. Über die "Reset"-Leitung kann die Schaltungsanordnung nach Erfassung eines wake-up-Falls wieder zu dem Ausgangszustand zurückgesetzt werden.

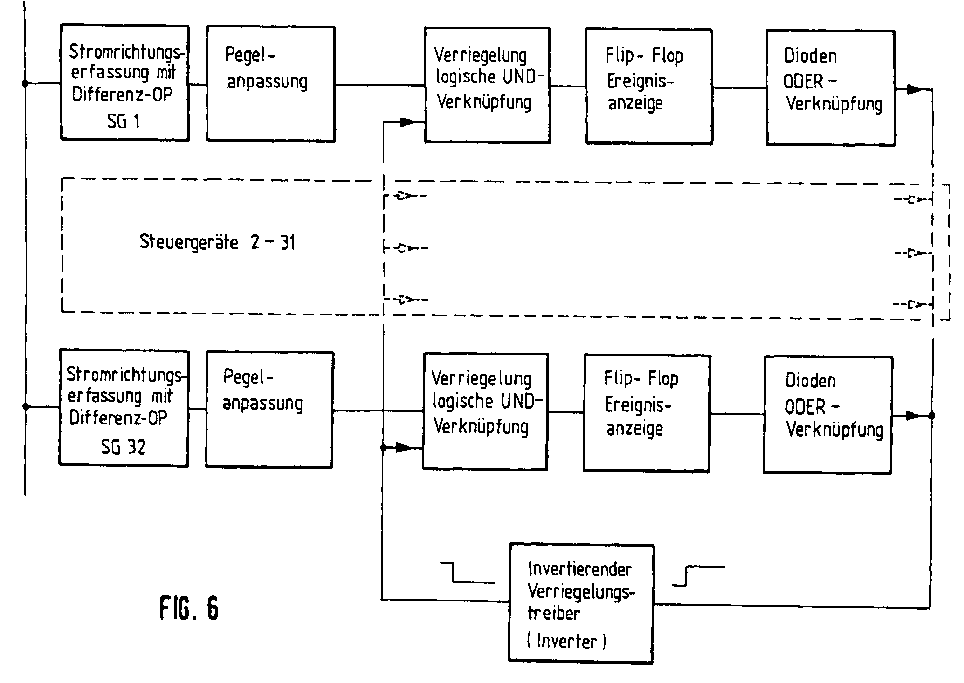

Fig. 6 zeigt schließlich in Form eines Blockschaltbilds die wesentlichen Komponenten der erfindungsgemäßen Schaltungsanordnung. Jedem Steuergerät SG1 - SG32 ist eine Stromrichtungserfassung mit Differenzoperationsverstärker zugeordnet. Über eine Pegelanpassung erfolgt die Signalanhebung. Nachgeschaltet ist das Sperrmittel, das der Verriegelung dient, was über eine logische UND-Verknüpfung wie beschrieben realisiert ist. Das nachgeschaltete Signalausgabemittel umfasst ein Flip-Flop sowie eine Ereignisanzeige in Form der beschriebenen LED, um ein identifiziertes Steuergerät anzeigen zu können. Über die Dioden, die eine ODER-Verknüpfung ermöglichen wird das jeweilige über die dem High- oder dem Low-Kanal zugeordneten Flip-Flops gelieferten Signale im wake-up-Fall an die gemeinsame zum invertierenden Verriegelungstreiber (Inverter) führenden Leitung gegeben. Dort wird die Spannungslage gedreht, so dass an den zweiten Eingang der jeweiligen Verriegelungsschaltung, also der UND-Glieder anstelle der ursprünglichen logischen "1" eine logische "0" steht.

## Patentansprüche

1. Schaltungsanordnung zur Ermittlung eines ein wake-up-Signal sendenden Steuergeräts eines Bussystems mit mehreren weiteren Steuergeräten, insbesondere eines CAN-Busses eines Kraftfahrzeugs,
**dadurch gekennzeichnet,**
**dass** sie zwischen jedes Steuergerät (SG1, ..., SG32) und die Busleitung (1) geschaltete Stromrichtungserfassungsmittel (2, 2') zur Erfassung eines wake-up-signalbedingten Stromfluss am sendenden Steuergerät,
jedem Steuergerät (SG1, ..., SG32) zugeordnete Signalausgabemittel (11, 11') zum Ausgeben eines das das wake-up-Signal sendende Steuergerät identifizierenden Signals, und
Mittel (10, 10') zum Sperren der den anderen Steuergeräten (SG1, ..., SG32) zugeordnete Signalausgabemittel (11, 11') nach Erfassen eines gesendeten wake-up-Signals aufweist.

2. Schaltungsanordnung nach Anspruch 1,
**dadurch gekennzeichnet,**
**dass** die Stromrichtungserfassungsmittel (2, 2') zwei antiparallel geschaltete Dioden (3, 4, 3', 4') umfasst.

3. Schaltungsanordnung nach Anspruch 2,
**dadurch gekennzeichnet,**
**dass** den antiparallel geschalteten Dioden (3, 4, 3', 4') ein eine Offsetspannung ausgleichender Widerstand (7, 7') parallel geschaltet ist.

4. Schaltungsanordnung nach einem der vorangehenden Ansprüche,
**dadurch gekennzeichnet,**
**dass** ein Stromrichtungserfassungsmittel (2, 2') einen Differenzoperationsverstärker (8, 8') umfasst.

5. Schaltungsanordnung nach Anspruch 4,
**dadurch gekennzeichnet,**
**dass** ein dem Differenzoperationsverstärker (8, 8') nachgeschalteter invertierender Operationsverstärker (9, 9') zur Spannungspegelanpassung des Signals des Differenzoperationsverstärkers (8, 8') vorgesehen ist.

6. Schaltungsanordnung nach einem der vorangehenden Ansprüche,
**dadurch gekennzeichnet,**
**dass** die Signalausgabemittel ein Flip-Flop (11, 11') und ein Anzeigemittel (12, 12') umfassen, wobei das Flip-Flop (11, 11') bei Vorliegen eines vom Stromrichtungserfassungsmittel (2, 2') gelieferten Signals, das das Senden eines wake-up-Signals anzeigt, ein Signal an das Anzeigemittel (12, 12') gibt.

7. Schaltungsanordnung nach Anspruch 6,
**dadurch gekennzeichnet,**
**dass** Anzeigemittel ein Leuchtmittel, insbesondere eine LED (12, 12') ist.

8. Schaltungsanordnung nach einem der vorangehenden Ansprüche,
**dadurch gekennzeichnet,**
**dass** das Signalausgabemittel ein Flip-Flop und eine Speichereinrichtung umfassen, wobei das Flip-Flop bei Vorliegen eines vom Stromrichtungserfassungsmittel gelieferten Signals, das das Senden eines wake-up-Signals anzeigt, ein Signal an die Speichereinrichtung gibt, wo die Identität des das wake-up-Signal sendenden Steuergeräts abgespeichert wird.

9. Schaltungsanordnung nach einem der vorangehenden Ansprüche,
**dadurch gekennzeichnet,**
**dass** ein einem Steuergerät (SG1, ..., SG32) zugeordnetes Sperrmittel ein UND-Glied (10, 10') umfasst, an dessen einen Eingang das Signal des zugeordneten Stromrichtungserfassungsmittels (2, 2') gegeben wird und an dessen anderen Eingang ein allen UND-Gliedern (10, 10') gegebenes gemeinsames Verriegelungssignal gegeben wird, wobei das Verriegelungssignal über einen Inverter (17) nach Erfassen eines ersten wake-up-Signals invertiert wird, so dass bei Anliegen eines die wake-up-Signalgabe des zugeordneten Steuergeräts anzeigenden Signals vom Stromrichtungserfassungsmittel eine UND-Verknüpfung am UND-Glied ausgeschlossen ist.

10. Schaltungsanordnung nach Anspruch 9,
**dadurch gekennzeichnet,**
**dass** bei Erfassen der ersten wake-up-Signalgabe das Signal dieses Signalausgabemittels, insbesondere des Flip-Flops (11, 11') an den Inverter (17) gelegt wird und dort zum Verriegeln der den anderen Steuergeräten zugeordneten UND-Glieder (10, 10') invertiert wird.

11. Schaltungsanordnung nach Anspruch 10,
**dadurch gekennzeichnet,**
**dass** allen Sperrmitteln bzw. allen UND-Gliedern (10, 10') ein gemeinsamer Inverter (17) zugeordnet ist, mit dem die Ausgänge aller Signalausgabemittel, insbesondere aller Flip-Flops (11,11') verbunden sind.

12. Schaltungsanordnung nach einem der vorangehenden Ansprüche,
**dadurch gekennzeichnet,**
**dass** jedem Steuergerät (SG1, ..., SG32) zwei Stromrichtungserfassungsmittel (2, 2'), zwei Signalausgabemittel (11, 11') und zwei Sperrmittel (10, 10') zugeordnet sind, wobei je ein Stromrichtungserfassungsmittel, ein Signalausgabemittel und ein Sperrmittel für den High-Kanal bzw. den Low-Kanal der Busleitung vorgesehen sind, jedoch invertiert arbeiten.

13. Schaltungsanordnung nach Anspruch 12,
**dadurch gekennzeichnet,**
**dass** die Ausgänge aller Signalausgabemittel, insbesondere der Flip-Flops (11, 11') auf eine gemeinsame zum Inverter (17) führende Leitung (16) gegeben werde, wobei die beiden Ausgänge der einem gemeinsamen Steuergerät zugeordneten Signalausgabemittel, insbesondere der Flip-Flops (11, 11') über ein ODER-Schaltung geführt werden, so dass entweder ein von dem dem High-Kanal oder dem Low-Kanal zugeordneten Signalsausgabemittel, insbesondere dem Flip-Flop (11, 11') gegebenes Signal an den Inverter gegeben wird.

14. Schaltungsanordnung nach Anspruch 13,
**dadurch gekennzeichnet,**
**dass** die ODER-Schaltung mittels zweier mit ihren Kathoden parallel geschalteter Dioden (14, 15) realisiert ist.

15. Schaltungsanordnung nach einem der vorangehenden Ansprüche,
**dadurch gekennzeichnet,**
**dass** sie Teil eines Funktionstestgeräts zum Testen von an einer Busleitung hängenden Steuergeräten vor deren Einbau insbesondere in ein Kraftfahrzeug ist, oder dass die Teil eines Überwachungsgeräts ist, das zusammen mit den an der Busleitung hängenden Steuergeräten insbesondere in ein Kraftfahrzeug eingebaut ist.

## Claims

1. A circuit arrangement for determining the controller - of a bus system having a plurality of other controllers, specifically a CAN bus of a vehicle - which is transmitting a wake-up signal,
**characterized in that**
said circuit arrangement includes a device (2, 2') which detects the direction of the current, said device being connected between each controller (SG1, ..., SG32) and the bus line (1), for detecting a flow of current produced by the wake-up signal at the transmitting controller,
signal output means (11, 11'), associated with each controller (SG1, ..., SG32), for outputting a signal identifying the controller transmitting the wake-up signal, and
means (10, 10') for blocking the signal output means (11, 11') associated with the other controllers (SG1, ..., SG32) after a transmitted wake-up signal has been detected.

2. A circuit arrangement according to Claim 1,
**characterized in that**
the device (2, 2') for detecting the direction of the current includes two antiparallel-connected diodes (3, 4, 3', 4').

3. A circuit arrangement according to Claim 2,
**characterized in that**
a resistor (7, 7'), compensating for an offset voltage, is connected in parallel with the antiparallel-connected diodes (3, 4, 3', 4').

4. A circuit arrangement according to one of the preceding claims,
**characterized in that**
a device (2, 2') for detecting the direction of the current involves a differential operational amplifier (8, 8').

5. A circuit arrangement according to Claim 4,
**characterized in that**
an inverting operational amplifier (9, 9'), connected downstream of the differential operational amplifier (8, 8'), is provided for adjusting the voltage level of the signal of the differential operational amplifier (8, 8').

6. A circuit arrangement according to one of the preceding claims,
**characterized in that**
the signal output means comprise a flip-flop (11, 11') and display means (12, 12'), in which case, in the presence of a signal delivered by the current-direction-detecting device (2, 2') indicating transmission of a wake-up signal, the flip-flop (11, 11') transmits a signal to the display means (12, 12').

7. A circuit arrangement according to Claim 6,
**characterized in that**
the display means is an illuminant, specifically an LED (12, 12').

8. A circuit arrangement according to one of the preceding claims,
**characterized in that**
the signal output means comprise a flip-flop and a storage device, in which case, in the presence of a signal delivered by the current-direction-detecting device indicating transmission of a wake-up signal, the flip-flop transmits a signal to the storage device, in which the identity of the controller transmitting the wake-up signal is stored.

9. A circuit arrangement according to one of the preceding claims,
**characterized in that**
blocking means associated with a controller (SG1, ..., SG32) comprise an AND gate (10, 10'), to one input of which the signal of the associated current-direction-detecting device (2, 2') is transmitted, and to the other input of which a common locking signal, sent to all AND gates (10, 10'), is transmitted, the locking signal being inverted via an inverter (17) following detection of a first wake-up signal so that, upon application of a signal from the current-direction-detecting device indicating transmission of a wake-up signal by the associated controller, an AND operation at the AND gate is precluded.

10. A circuit arrangement according to Claim 9,
**characterized in that**,
on detection of the transmission of the first wake-up signal, the signal of this signal output device, specifically of the flip-flop (11, 11'), is applied to the inverter (17) and there is inverted for locking of the AND gates (10, 10') associated with the other controllers.

11. A circuit arrangement according to Claim 10,
**characterized in that**
associated with all the blocking devices, that is to say all the AND gates (10, 10'), is a common inverter (17), with which the outputs of all the signal output devices, specifically of all the flip-flops (11, 11'), are connected.

12. A circuit arrangement according to one of the preceding claims,
**characterized in that**
two current-direction-detecting devices (2, 2'), two signal output devices (11, 11') and two blocking devices (10, 10') are associated with each controller (SG1, ..., SG32), one current-direction-detecting device, one signal output device and one blocking device being provided in each case for the high channel and the low channel respectively of the bus line, but with inverted operation.

13. A circuit arrangement according to Claim 12,
**characterized in that**
the outputs of all the signal output devices, specifically of the flip-flops (11, 11'), are transmitted on a common line (16) leading to the inverter (17), the two outputs of the signal output devices, specifically of the flip-flops (11, 11'), associated with a common controller being guided via an OR circuit so that either a signal transmitted from the signal output device, specifically the flip-flop (11, 11'), associated with the high channel or a signal transmitted from the signal output device, specifically the flip-flop (11, 11'), associated with the low channel, is transmitted to the inverter.

14. A circuit arrangement according to Claim 13,
**characterized in that**
the OR circuit is in the form of two diodes (14, 15) with their cathodes connected in parallel.

15. A circuit arrangement according to one of the preceding claims,
**characterized in that**
it is part of a functional test unit for testing controllers attached to a bus line prior to their installation in particular in a motor vehicle, or **in that** it is part of a monitoring unit which, together with the controllers attached to the bus line, is installed specifically in a motor vehicle.

## Revendications

1. Agencement de circuits pour déterminer un contrôleur, envoyant un signal de réveil d'un système de bus ayant plusieurs autres contrôleurs, en particulier d'un bus CAN d'un véhicule,
**caractérisé en ce qu'**il présente
des moyens de détection du sens du courant (2, 2') placés entre chaque contrôleur (SG1, ..., SG32) et la ligne du bus (1) et destinés à détecter, au niveau du contrôleur émetteur, un flux de courant lié au signal de réveil,
des moyens de délivrance de signal (11, 11') associés à chaque contrôleur (SG1, ..., SG32) et destinés à délivrer un signal identifiant le contrôleur envoyant le signal de réveil, et
des moyens (10, 10') pour bloquer les moyens de délivrance de signal (11, 11') associés aux autres contrôleurs (SG1, SG32) après la détection d'un signal de réveil envoyé.

2. Agencement de circuits selon la revendication 1, **caractérisé en ce que**
les moyens de détection du sens du courant (2, 2') comprennent deux diodes connectées en antiparallèle (3, 4, 3', 4').

3. Agencement de circuits selon la revendication 2, **caractérisé en ce que**
une résistance compensant la tension de décalage (7, 7') est montée en parallèle aux diodes connectées en antiparallèle (3, 4, 3', 4').

4. Agencement de circuits selon l'une quelconque des revendications précédentes, **caractérisé en ce que** un amplificateur opérationnel différenciateur (8, 8) comprend des moyens de détection du sens du courant (2, 2').

5. Agencement de circuits selon la revendication 4, **caractérisé en ce que**
il est prévu un amplificateur opérationnel inverseur (9, 9'), placé en aval de l'amplificateur opérationnel différenciateur (8, 8') et destiné à adapter le niveau de tension de l'amplificateur opérationnel différenciateur (8, 8').

6. Agencement de circuits selon l'une quelconque des revendications précédentes, **caractérisé en ce que** les moyens de délivrance de signal comprennent une bascule (11, 11') et des moyens d'affichage (12, 12), la bascule (11, 11') fournissant un signal aux moyens d'affichage (12, 12') en cas de présence d'un signal, délivré par les moyens de détection du sens du courant (2, 2'), qui indique l'envoi d'un signal de réveil.

7. Agencement de circuits selon la revendication 6, **caractérisé en ce que**
les moyens d'affichage sont des dispositifs lumineux, en particulier des diodes électroluminescentes (12, 12').

8. Agencement de circuits selon l'une quelconque des revendications précédentes, **caractérisé en ce que** les moyens de délivrance de signal comprennent une bascule et un dispositif de mémoire, moyennant quoi, en cas de présence d'un signal, délivré par les moyens de détection du sens du courant, qui indique l'envoi d'un signal de réveil, la bascule fournit un signal au dispositif de mémoire dans lequel est stockée l'identité du contrôleur envoyant le signal de réveil.

9. Agencement de circuits selon l'une quelconque des revendications précédentes, **caractérisé en ce que** des moyens de blocage associés à un contrôleur (SG1, ..., SG32) comprennent un élément ET (10, 10') à une entrée duquel est fourni le signal des moyens de détection du sens du courant associés (2, 2') et à l'autre entrée duquel est fourni un signal de verrouillage commun fourni à tous les éléments ET (10, 10'), le signal de verrouillage étant inversé par un inverseur (17) après la détection d'un premier signal de réveil de sorte qu'une combinaison ET soit exclue au niveau de l'élément ET lorsque les moyens de détection du sens du courant fournissent un signal indiquant la délivrance du signal de réveil du contrôleur associé.

10. Agencement de circuits selon la revendication 9, **caractérisé en ce que**,
en cas de détection de la première délivrance de signal de réveil, le signal de ces moyens de délivrance de signal, en particulier de la bascule (11, 11'), est appliqué à l'inverseur (17) et qu'il y est inversé afin de verrouiller les éléments ET (10, 10') associés aux autres contrôleurs.

11. Agencement de circuits selon la revendication 10, **caractérisé en ce que**
à tous les moyens de blocage respectivement à tous les éléments ET (10, 10') est associé un inverseur commun (17) auquel sont reliées les sorties de tous les moyens de délivrance de signal, en particulier de toutes les bascules (11, 11').

12. Agencement de circuits selon l'une quelconque des revendications précédentes, **caractérisé en ce que** deux moyens de détection du sens du courant (2, 2'), deux moyens de délivrance de signal (11, 11') et deux moyens de blocage (10, 10') sont associés à chaque contrôleur (SG1, ..., SG32), des moyens de détection du sens du courant, des moyens de délivrance de signal et des moyens de blocage étant prévus pour le canal Haut respectivement le canal Bas de la ligne de bus, fonctionnant toutefois de manière inversée.

13. Agencement de circuits selon la revendication 12, **caractérisé en ce que**
les sorties de tous les moyens de délivrance de signal, en particulier des bascules (11, 11'), sont fournies à une ligne commune (16) menant à l'inverseur (17), moyennant quoi les deux sorties des moyens de délivrance de signal associés à un contrôleur commun, en particulier celles des bascules (11, 11'), sont menées par le biais d'un circuit OU de sorte que soit fourni à l'inverseur un signal fourni par les moyens de délivrance de signal, en particulier par la bascule (11, 11'), associés soit au canal Haut soit au canal Bas.

14. Agencement de circuits selon la revendication 13, **caractérisé en ce que**
le circuit OU est réalisé au moyen de deux diodes (14, 15) ayant leur cathode montée en parallèle.

15. Agencement de circuits selon l'une quelconque des revendications précédentes, **caractérisé**
**en ce qu'**il fait partie d'un appareil de test de fonctionnement destiné à tester des contrôleurs, reliés à une ligne de bus, avant leur montage en particulier dans un véhicule,
ou en ce qu'il fait partie d'un appareil de surveillance qui est monté, en particulier dans un véhicule, conjointement aux contrôleurs reliés à une ligne de bus.
